# EUROPEAN PATENT APPLICATION

(11) **EP 1 585 257 A2**
(43) Date of publication of application: **12.10.2005**
(21) Application number: 05468005.3
(22) Date of filing: 14.03.2005
(51) Int. Cl.: H04L 12/26, H04L 12/24

(54) **Method of remote supervision, reading and control of intelligent consumption meters**

(30) Priority: 19.03.2004 SI 200400084; 28.06.2004 SI 200400190
(71) Applicant: Iskraemeco, Merjenje in Upravljanje Energije, D.D., 4000 Kranj (SI)
(72) Inventor: Rozman, Miro, 4248 Lesce (SI); Oranic, Janez, 4204 Golnik (SI); Jamnik, Pavel, 1230 Domzale (SI); Kozole, Milan, 4240 Radovljica (SI); Mocnik, Vojteh, 4000 Krani (SI); Perne, Jozef, 4202 Naklo (SI); Rodic, Gregor, 1107 Ljubljana Siska (SI); Medjeral, Nenad, 1000 Ljubljana (SI)
(74) Representative: Gros, Mladen

(57) **Abstract**

In a public telecommunication network present within a vast territory there is established a virtual private AMR-VPN network for remote supervision, reading and control of intelligent consumption meters of distributed goods, said network being supported by an information system for performing public value added telecommunication services. Intelligent goods consumption meters are equipped with a suitable communication interface and are connected to the information system for performing said functions via said virtual private AMR-VPN network.

Advantageously, a program for controlling the measurement and tariffing of the said intelligent meters is stored in a microcontroller of a communication module comprising a standard communication interface for bidirectional communication. This program also includes functions of processing the measurement data, storing the data and the results, displaying the measurement results, registering alarm states and processing input and output signals.

The processed measurement data, stored data and results and the data on alarm states flow just within a single microcontroller, which increases the operation reliability of the said intelligent meter and extends the mean time between failures (MTBF).

A user is allowed to freely select a provider, thus getting the best conditions and adequate services in the provision of goods; an efficient market deregulation is made possible. The public telecommunication network in the territory enables a simple, fast and adaptable connection between a goods distributor and the users, who choose such connection and at the same time the users can freely select the distributor's value added services.

## Description

The invention relates to a method of remote supervision, reading and control of intelligent consumption meters connected to a network of distribution of goods like energy, energy resources or natural resources within a vast territory and of processing of measurement data as well as providing other value added services. In this method the intelligent consumption meters communicate with an information system for remote supervision, reading and control of the consumption meters and for the processing of measurement data as well as providing other value added services, whereat the method of the invention shall offer users an opportunity to freely select a goods supplier and, according to a preferred embodiment, the said meters of goods consumption are provided with a communication module comprising a standard communication interface for a bidirectional communication, which communication module is adapted in such a way that it also includes functions of a microcontroller hitherto used in the meters.

There is a known technical solution, in which intelligent consumption meters for a remote supervision, reading and control of distributed electricity connected to an electricity network within a vast territory and for the processing of gathered measurement data as well as providing other value added services communicate with a suitable information system (WO 03/055031 and WO 03/044980). A distributor builds its own data network for local communication of said intelligent meters with concentrators provided for individual parts of said territory. The concentrators perform communication with a group of meters in the area of one transformer station. The distributor establishes local AMR (Automatic Meter Reading) communication lines from the intelligent meters equipped with RF or PLC (Power Line Communication) interfaces to the concentrators in the form of radio frequency links and running via power lines, respectively. The concentrators, however, communicate with a centre for data processing and tariffing control via public telecommunication networks. Establishing said new communication lines is a demanding and time-consuming operation and the communication along these lines is unreliable due to the unstable transmission channel on power lines or the foreseen frequency band may be subject to coincidental disturbances or entered by third persons. The reliability of the local communication is not satisfactory. Since in a certain territory all measurement points have to be adequately equipped regardless of the fact that some user might not wish new services, the transition to this technical solution is slow and may take five to ten years. The said centre for data processing and tariffing control must be equipped with its own information system for remote supervision, reading and control of the consumption meters and for the processing of the measurement data as well as for providing other value added services like CRM (Customer Relation Management) system, TM (Telecommunication Management) system, data bases on user credits and the like. A big disadvantage of such approach is that it renders efficient market deregulation impossible.

On the other hand, nowadays numerous telecommunication networks are established in the said vast territories. They are equipped with the TM system or at least with the OSS (Operations Support System) system via which a telecommunication operator supervises and manages its telecommunication network. This network may also include an intelligent terminal equipment. The telecommunication operator also supervises and manages network and subscriber services and bills them to its subscribers. The operator can also render services to other service providers and perform billing on their behalf. To serve this purpose in a telecommunication network one or several separated data networks are built up, which connect the elements of the telecommunication network into a virtual network. As a rule, each such network is connected into a business-information operator network performing the procedures like CRM, billing and planning. On the level of protection of its network the operator ensures a safe connection in the said virtual network, which represents the demanding part of establishing an information support architecture to serve the supervision and management of the network and the services. Especially mobile telecommunication networks include many prepaid customers who pay their services prior to actual consumption. Also known is e-payment offered lately by financial institutions. It offers a possibility of paying invoices via the Internet. An individual user can pay services to the supplier's prepayment account. A system to protect the system against fraudulent use in the latter case is assured by providers, normally banks.

The technical problem solved by the invention is how to enable suppliers of goods like energy, energy resources and natural resources to remotely supervise, read and control individual meters of consumption of said goods within a vast territory, to process the gathered measurement data and to offer any modem value added service linked to their object of business as well as to offer users a free selection of a goods supplier, whereat the use of the method should be simple and adaptable to the wishes of both suppliers and users and also more reliable.

The mentioned technical problem is solved by the suggested method defined by the features of the characterizing part of the first claim, with the dependent claims defining variant embodiments.

Compared to the known method, the method of the invention of a remote supervision, reading and control of intelligent consumption meters connected to a network of distribution of energy, energy resources or natural resources within a vast territory and of processing measurement data as well as providing other value added services distinguishes itself by the fact that the users can freely select the provider thus getting the best conditions and adequate services in the consumption of goods. Simultaneously, a more efficient market deregulation is made possible.

Moreover, via public telecommunication network in the vast territory the distributors ensure a simple, fast and adjustable connection between goods suppliers and those users who had chosen for such connection and at the same time the users can freely select value added services.

The proposed method has many other advantages evident from the description of variant embodiments.

The invention will now be described in more detail based on the description of variant embodiments of the method of the invention.

The known method for the remote supervision, reading and control of intelligent consumption meters of distributed goods like energy (electricity, heat), energy resources (gas, liquid fuel) or natural resources (e.g. tap water) and for the processing of measurement data as well as providing other value added services by the distributor, whereat said intelligent meters of distributed goods consumption are connected to the network for the distribution of goods within a quite vast territory is upgraded by the invention in the following way.

Let us first explain that within the known method the intelligent consumption meters communicate with the information system for the remote supervision, reading and control of the intelligent meters of goods consumption and for the processing of measurement data and providing other distributor's value added services, yet groups of the intelligent consumption meters in the area of one transformer station communicate via the distributor's private data network for local communication first with concentrators provided for individual parts of said territory and the concentrators communicate with a centre for data processing and tariffing control via a public telecommunication network.

According to the method of the invention, however, each mentioned intelligent consumption meter is equipped with a standard communication interface for bidirectional communication and is directly connected to the centre for data processing and tariffing control via a virtual private AMR-VPN network for the remote supervision, reading and control of consumption meters, which network is supported by an information system for providing public telecommunication value added services.

Alternatively, each said intelligent goods consumption meter may be equipped with a GSM (Global System for Mobile Communication) interface, with a GPRS (General Packet Radio Service) interface or with an UMTS (Universal Mobile Telecommunications System) interface.

To serve this purpose the virtual private AMR-VPN network for the remote supervision, reading and control of the consumption meters is established in a public switched telephone network or mobile telecommunication network available on the mentioned territory.

In relation to the public telecommunication network the intelligent goods consumption meters function as intelligent terminal devices. For instance the intelligent electricity meter as an intelligent meter of the active electric energy consumption can perform the following functions apart from this basic function: measuring reactive and apparent energy, frequency, phase angle, voltage, current, determining the direction of higher harmonics active energy; it can also be provided with relays for the direct control of consumers, with a switching-off relay if a prepayment meter is in question and can also locally communicate with in-house automation allowing power consumption management.

In a variant, in one public telecommunication network in said territory several virtual private AMR-VPN networks can be established or in several public telecommunication networks in said territory one or more virtual private AMR-VPN networks can be established.

In a further variant embodiment the intelligent consumption meters equipped with a suitable communication interface belonging to the same more demanding user in said territory are connected to various virtual private AMR-VPN networks, each of which is established in another, from the rest of them entirely separated public telecommunication network in the mentioned territory. Thus reliability is improved and fraudulent uses are prevented more efficiently.

The reliability of the data transmission in the virtual private AMR-VPN networks is satisfactorily assured. A goods distributor needs not invest into the establishment of a new local communication network nor has he any problems and costs related to the maintenance of the communication network. Moreover, the programme equipment of modem public telecommunication networks [PSTN (Public Switched Telephone Network), ISDN (Integrated Services Digital Network); GSM, GPRS, UMTS (Universal Mobile Telecommunications System); Internet] providing telecommunication value added services can be simply and flexibly and without much expense upgraded with program equipment to assure value added services with respect to the distributed goods. The public telecommunication network operator thus markets the virtual private AMR-VPN network as a service performed for the goods distributor. The goods distributor can thus also be offered read-outs of the intelligent meters of goods consumption and other processed information.

If in individual parts of said territory the intelligent consumption meters have already been connected to concentrators provided for said parts of the territory via local communication connections, these concentrators are, according to the proposed method, connected to said virtual private AMR-VPN network. The existing local communication networks can be established as radio-frequency connections or via power lines. The above-mentioned already existing connections are advantageously included in the AMR-VPN network.

Via said virtual private AMR-VPN network the distributor of goods renders its value added services and bills goods consumption for the mentioned intelligent consumption meters.

The goods distributor can hereat reuse the information system used to perform the telecommunication value added services so that the data gathered from said intelligent consumption meters are transformed into a goods data record in CDR (Call Data Record) format. The new data record on the distributed goods is therefore called EDR (Energy Data Record). In this case the distributor's base of users can be part of the base of telecommunication subscribers.

At the above-mentioned reuse of the information system used to perform the public telecommunication value added services, the support of the value added services in respect of goods distribution can be implemented within the TM system or within the CRM system or in the dial-up centres in the public telecommunication network. The users thus obtain a possibility to report errors, solve claims and similar.

The method of the invention enables the goods distributor to have the operator in the public telecommunication network - in which the virtual private AMR-VPN network was established - perform the distribution of the value added services and bill the consumed goods on its behalf. The goods distributor then purchases the measurement and billing data from the operator in the public telecommunication network. The data can be in the form of a pre-processed database serving as a basis for issuing invoices.

The method of the invention makes it possible to individually treat individual users and even to treat them according to the SLA (Service Level Agreement).

A total bill for the telecommunication services and the services regarding consumption of one or several distributed goods can be issued to the consumer in an advantageous way, which contributes to lower costs of payment of telecommunication services and services related to goods distribution.

The user selects the level of services, which determines the selection of the mode of communication also with respect to equipment. SMS (Short Message Service) mode for instance is the most economical way when only periodical read-outs are in question. Dial-up mode or packet mode are more adequate when transmitting larger quantities of data. The packet mode also provides for status and performance tracking of all users and for management of alarms within the TM system.

The method of the invention allows the distributor to quickly establish the remote supervision, reading and control of the intelligent meters of consumption of his distributed goods and the processing of measurement data as well as the providing of other value added services since nowadays every territory is covered by operating public telecommunication networks and just one or several virtual private AMR-VPN networks has to be established in one or more of them, whereupon the intelligent goods consumption meters of the interested users can be immediately connected.

The virtual private AMR-VPN network offers an adequate reliability of the transmission. Fraudulent use is prevented by the means of the telecommunication system included into a supervising system that detects any fraudulent use of the intelligent meter.

The method of the invention allows the goods distributors to perform competitive services related to the distributed goods, such as differentiated tariff schemes, very detailed calculation of goods consumption, measurement data analysis, management of goods consumption via dynamic tariffs. In a simple way the distributor uses any of the known modes of billing the goods consumption, such as billing based on periodical read-outs, billing based on read-outs of daily consumption diagrams (load profile), tariff schemes and dynamic tariffing in real time in compliance with the currently valid price in view of the ratio of the current offer against the current demand. The prepayment mode of calculation as known with mobile GSM services can easily be implemented, also by using e-payment.

By the invention this method is still improved by storing a program for controlling the measurement and the tariffing of the said intelligent meter of the goods consumption in a microcontroller of a communication module comprising a standard communication interface for bidirectional communication.

Here the program for controlling the measurement and tariffing stored in the microcontroller of the communication module comprising the standard communication interface for bidirectional communication also includes the functions of processing the measurement data, storing the data and the results, displaying the measurement results, registering alarm states and processing input and output signals.

Namely, the microcontroller of the standard communication module has a sufficient functionality and capacity, i.e. a storage device, peripheral units as well processing capacity, that it, additionally to the communication, also drives the controlling of the measurement and tariffing of the said intelligent meter of the distributed goods consumption. So far this controlling in the said intelligent meter has been performed by a special microcontroller connected to a measuring module and a display unit. A standard communication module was connected to the said microcontroller. According to the proposed method the said separate microcontroller is not needed any more. Thus according to the proposed method the number of electronic components in the intelligent meter of the consumption of distributed goods is reduced.

By means of the proposed improvement the capacity of the microcontroller in the communication module is used so that instead of two microcontrollers just a single one is installed. Therefore the processed measurement data, the stored data and results and the data on the alarm states flow just within one microcontroller. Hereby the operation reliability of the intelligent meter of the consumption of the distributed goods is increased and the mean time between failures (MTBF) therein is extended.

With respect to the public telecommunication network the intelligent meters of the consumption of the distributed goods behave as intelligent terminal devices.

## Claims

1. Method of remote supervision, reading and control of intelligent consumption meters connected to a network for distribution of goods like energy, energy resources or natural resources within a vast territory and of measuring the consumption of the distributed goods, and
of processing measurement data as well as providing other value added services,
according to which method the intelligent consumption meters communicate with an information system for remote supervision, reading and control of the consumption meters and for processing the measurement data as well as providing other distributor's value added services and which method is **characterized in**
**that** in a public telecommunication network available on said territory a virtual AMR-VPN network for remote supervision, reading and control of the consumption meters is established,
which is supported by an information system for providing public telecommunication value added services;
**that** said intelligent consumption meters are equipped with a standard communication interface for bidirectional communication;
**that** a program for controlling the measurement and tariffing of the said intelligent consumption meters is stored in a microcontroller of a communication module comprising a standard communication interface for bidirectional communication,
and **that** said intelligent consumption meters equipped with a standard communication interface for bidirectional communication
are connected via said virtual private AMR-VPN network to the information system for remote supervision, reading and control of the consumption meters and for the processing of measurement data and providing other value added services.

2. Method according to claim 1, **characterized in**
**that** the program for controlling the measurement and tariffing stored in the microcontroller of the communication module comprising the standard communication interface for the bidirectional communication, also includes the functions of processing the measurement data, storing the data and the results, displaying the measurement results, registering alarm states and processing input and output signals.

3. Method according to claim 1 or 2, **characterized in**
**that** said intelligent consumption meters are additionally equipped with a GSM interface.

4. Method according to claim 1, 2 or 3, **characterized in**
**that** said intelligent consumption meters are additionally equipped with a GPRS interface.

5. Method according to claim 1, 2, 3 or 4, **characterized in**
**that** several virtual private AMR-VPN networks are established in one public telecommunication network on said territory.

6. Method according to claim 1, 2, 3 or 4, **characterized in**
**that** one or several virtual private AMR-VPN networks are established in several public telecommunication networks on said territory.

7. Method according to claim 1, 2, 3 or 4, **characterized in**
**that** intelligent consumption meters equipped with a suitable communication interface of the same user in said territory are connected to various virtual private AMR-VPN networks,
each of which is established in another public telecommunication network in said territory.

8. Method according to claim 1 to 7, **characterized in**
**that** the intelligent consumption meters in individual parts of said territory are connected to concentrators provided for said parts of the territory via local communication connections
and **that** the concentrators from said territory are connected to said virtual private AMR-VPN network.

9. Method according to claim 8, **characterized in**
**that** said local communication connections are established as radio-frequency connections.

10. Method according to claim 8, **characterized in**
**that** said local communication connections are established via power lines.

11. Method according to any of the preceding claims 1 to 10, **characterized in**
**that** the distributor of goods provides his value added services and billing for said intelligent goods consumption meters via said virtual private AMR-VPN network.

12. Method according to claim 11, **characterized in**
**that** the goods distributor reuses an information system for performing public telecommunication value added services
so that the data gathered from said intelligent consumption meters are transformed into a goods data record in CDR format.

13. Method according to claim 12, **characterized in**
**that** a support to the value added services related to the goods distribution is performed within the scope of the TM system.

14. Method according to claim 12, **characterized in**
**that** a support for the value added services related to the goods distribution is performed within the CRM system.

15. Method according to claim 12, **characterized in**
**that** a support for the value added services related to the goods distribution is performed within dial-up centres in the public telecommunication network.

16. Method according to any of the preceding claims 1 to 10, **characterized in**
**that** the value added services and billing of consumed goods are performed by the operator in the public telecommunication network, in which the virtual private AMR-VPN network was established.

17. Method according to any of the preceding claims 1 to 16, **characterized in**
**that** the intelligent consumption meters for an individual user are treated individually.

18. Method according to claim 17, **characterized in**
**that** the intelligent consumption meters for an individual user are treated individually in compliance with the SLA.

19. Method according to any of the claims 1 to 18, **characterized in**
**that** a user is issued a total bill for the telecommunication services and the services related to consumption of one or several distributed goods.
